Europäisches Patentamt

European Patent Office

Office européen des brevets

(11) Publication number: **0 010 919**
**B1**

(12) **EUROPEAN PATENT SPECIFICATION**

(45) Date of publication of patent specification: **12.05.82**

(51) Int. Cl.³: **F 16 G 5/20**

(21) Application number: **79302304.5**

(22) Date of filing: **23.10.79**

(54) **Endless power transmission belt.**

(30) Priority: **30.10.78 JP 149708/78**

(43) Date of publication of application:
**14.05.80 Bulletin 80/10**

(45) Publication of the grant of the patent:
**12.05.82 Bulletin 82/19**

(84) Designated Contracting States:
**CH DE FR GB IT NL SE**

(56) References cited:
**US - A - 2 941 413**
**US - A - 3 626 775**
**US - A - 3 830 113**
**US - A - 4 002 082**
**US - A - 4 011 766**

(73) Proprietor: **MITSUBOSHI BELTING LIMITED**
**No. 1-21, Hamazoedori 4-chome**
**Nagata-ku Kobe-shi, Hyogo (JP)**

(72) Inventor: **Imamura, Junji**
**No. 501-20, Minbudani, Shioya-cho**
**Tarumi-ku Kobe-shi, Hyogo (JP)**

(74) Representative: **Cooper, Derek Robert et al,**
**Marks & Clerk Alpha Tower ATV Centre**
**Birmingham B1 1TT (GB)**

Courier Press, Leamington Spa, England.

0010919

Endless power transmission belt

This invention relates to endless power transmission belts of the so-called cog type wherein a plurality of transverse grooves are formed in the inner surface of the belt, a cog being defined between each pair of adjacent grooves.

Conventional cog type V-belts are higher in flexibility than ordinary V-belts having no such cogs. Accordingly, the cog type V-belt is advantageous in that less heat is generated during use, which leads to an increase in its service life. Also, it can be used with small diameter pulleys because of its high flexibility, and therefore contributes to the compact design of power transmission systems. However, the cog type V-belt is disadvantageous in that it generates noise when operated, and therefore it is not suitable for use in a location where noise levels should be minimized, such as in an automobile.

The cause of the noise generated during operation of a cog type V-belt is as follows. When a cog type V-belt is fitted in a pulley groove, it becomes positioned deep in the groove because it is curved downwardly due to great tension applied thereto at a distance from the pulley. Under this condition, the belt is only forcibly released from the pulley groove during operation. The cogs on the inner surface of the belt are released intermittently from the pulley groove while the side walls of the pulley groove are abraded by the side walls of the belt, thereby generating a squeaky sound. Since this operation is repeatedly carried out, a noise results. In contrast to this, the corresponding part of an ordinary belt having no cogs on its inner surface is continuously pulled out of the pulley groove, and therefore the volume of noise generated thereby is small.

The characteristic features of the noise generated during operation of the belt are as follows:

(1) The volume of sound generated is a maximum at a position where the belt leaves the pulley groove.

(2) The volume of noise caused by a V-belt having no cogs is small because the V-belt is continuously pulled out of the pulley: however, the volume of noise generated by a cog type V-belt is large, because the cogs are pulled out of the pulley groove intermittently.

(3) If the coefficient of friction of the cogs is decreased, then the belt can be readily pulled out of the pulley groove and therefore the volume of noise can be made smaller. On the other hand, if the coefficient of friction of the cogs is increased, it becomes difficult to pull the belt out of the pulley groove and accordingly the volume of noise is increased. Accordingly, the volume of noise caused by a raw edge type V-belt is greater than that of a wrapped belt having a low coefficient of friction.

(4) If the tension applied to the belt is increased, it becomes very difficult to pull the belt out of the pulley groove, and accordingly the volume of noise is increased.

In the case of the cog type belt, if the rotational speed of the driving pulley is increased while the tension of the belt is maintained unchanged, then the sound pressure level increases abruptly when the rotational speed of the pulley reaches a predetermined number of revolution per minute. If the rotational speed of the pulley is further increased, then the sound pressure level initially decreases, but thereafter gradually increases again. Hereinafter, the abruptly increased sound pressure level caused at a particular r.p.m. of the driving pulley will be referred to as a "peak sound" when applicable. In order to use the cog type V-belt in an automobile or a passenger car, it is essential to ensure that the peak sound is not generated when the engine is run within the range of normal cruising speeds.

With the cog type V-belt, the r.p.m. at which the peak sound is generated is proportional to the pitch of the grooves formed in the inner surface of the belt. More specifically, when the groove pitch is increased, the r.p.m. at which the peak sound is generated is also increased. This means that the peak sound will be generated when the number of cogs pulled out from the pulley groove per unitary time becomes constant, i.e. when the cogs are pulled out from the pulley groove with a constant periodicity.

In order to overcome the above-described difficulty, a cog type V-belt in which grooves are formed at random pitches in the inner surface of the belt (a so-called random cog V-belt) has been proposed in Japanese Utility Model Application No. 117751/77 and in U.S. Patent No. 2,941,413. It is considered that such a random cog V-belt can decrease the peak sound because the cogs are pulled out from the pulley unperiodically, i.e. on a random basis; however, it has been found that in practice the peak sound is not decreased as much as might be expected. U.S. Patent No. 2,941,413 does, however, also contemplate varying the size, pitch and arrangement of the individual cogs and grooves to assert more definitely the noise retarding influence.

Thus, in order to decrease the peak sound, it is necessary to design the belt so that it can readily be pulled out from the pulley groove, for which it is necessary (1) to increase the cut angle, (2) to decrease the cog depth, and (3) to decrease the hardness of the cogs. An alternative measure for decreasing the peak sound is to decrease the frictional resistance which is caused when the belt is pulled out of the pulley groove for which it is necessary (1) to make the belt slippery by covering the cogs or the belt side surfaces with canvas, and (2) to decrease the co-efficient of friction of the cogs. In this connection if the groove cut angle is increased, then during operation of the belt the contact area between the cogs and the pulley is decreased. The side pressure on the belt causes the outer surface of the belt to be deformed into a concave shape, as a result of which the belt drops in the pulley groove and the tension of the belt decreases. If the cog depth is decreased, then the flexibility of the belt is de-

2

creased, and therefore the advantageous effects of the cog type belt are reduced.

In view of the foregoing, it is an object of the present invbention to provide a cog type endless power transmission belt in which the operational noise is reduced.

According to the present invention there is provided an endless power transmission belt having a plurality of transverse grooves formed in its inner surface and a cog defined between each pair of adjacent grooves, at least two of the three parameters of groove pitch (p) in the longitudinal direction of the belt, groove depth (d) and cut angle (a) between the facing side walls of the groove being varied randomly between successive grooves in the longitudinal direction of the belt, and wherein the cut angle (a) is in the range of 10° to 40°.

Preferably, the pitch (p) between each pair of adjacent grooves is between 60% and 100% of the thickness of the belt, and the depth (d) of each groove is between 20% and 40% of the thickness of the belt.

An embodiment of the present invention will be described, by way of example, with reference to the accompanying drawings, in which:—

Figure 1 is a side view of a power transmission system including a conventional raw edge cog type V-belt;

Figure 2 is a sectional view taken along line II—II in Figure 1, showing the cog type V-belt;

Figure 3 is a sectional view taken along the line III—III in Figure 2, showing a part of the cog type V-belt;

Figure 4 is a sectional view of an endless power transmission belt according to the present invention;

Figure 5 is a side view of a length of the belt shown in Figure 4; and

Figure 6 is a graph indicating the relationship between the rotational speed and the sound pressures generated by various cog type V-belts having different groove formations in their inner surfaces.

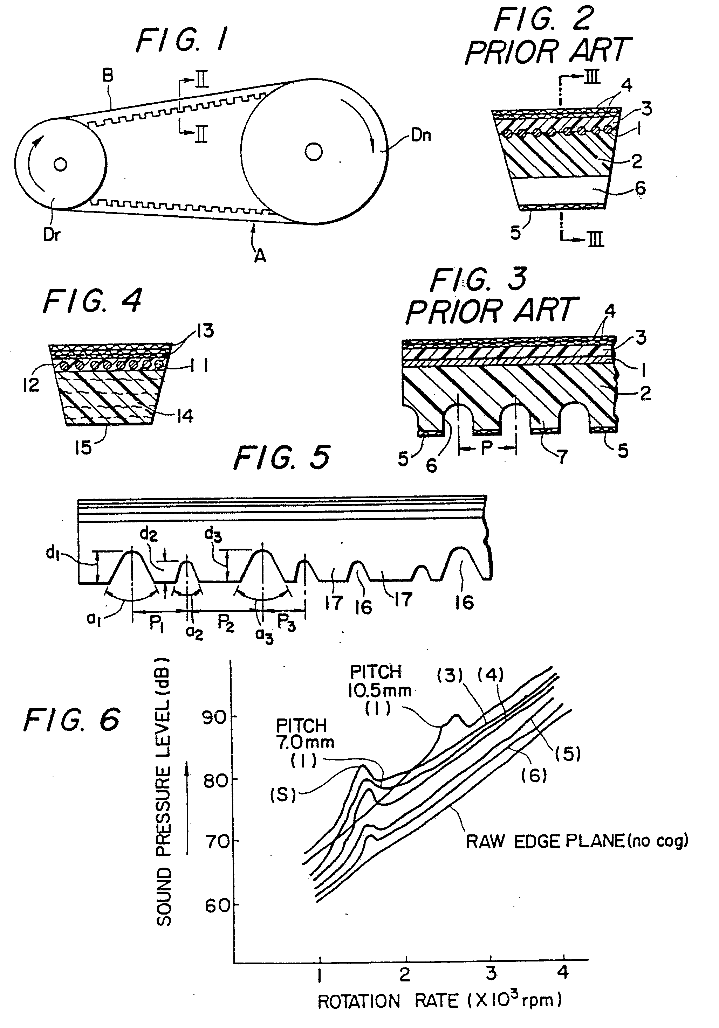

Figure 1 shows a power transmission system in which a conventional uniform pitch cog type V-belt B is led under a predetermined tension around a driving pulley Dr and a driven pulley Dn, the driving pulley Dr being rotated clockwise as viewed in the figure. As described above, the maximum volume of sound is generated at a position A where the belt leaves the driven pulley Dn.

Figures 2 and 3 are sectional views of the conventional cog type V-belt, which comprises a neutral axis section 1, a compression rubber layer 2, a tension rubber layer 3, a top or outer cover cloth 4, and a bottom or inner cover cloth 5. The belt further comprises a plurality of transverse grooves 6 cut at a predetermined constant pitch into a surface of the compression rubber layer 2 at the inner surface of the belt, a cog 7 being defined between each pair of adjacent grooves 6. All of the grooves 6 have the same cross-section and the same depth. As the driving pulley Dr is rotated, the V-belt is forcibly removed from the groove in the driven pulley Dn, resulting in the cogs 7 being intermittently pulled from the driven pulley groove. During this operation, the belt side surfaces are rubbed by the pulley groove side walls, and as a result squeaky sounds are generated. The periodic repetition of these sounds causes noise to be generated.

Figures 4 and 5 show one example of an endless power transmission belt according to the present invention, in the form of a raw edge cog type V-belt. The V-belt has a neutral axis section 11 comprising an adhesion rubber layer 12 in which is embedded a helically wound cord. A top or outer cover 13 made of a plurality of bias fabrics is provided on a surface of the adhesion rubber layer 12 which forms the outer surface of the belt. A compression rubber layer 14 is provided inwardly of the adhesion rubber layer 12, and has arranged therein fibres 15 made of polyester or rayon which are oriented transversely with respect to the longitudinal direction of the belt. A surface of the compression rubber layer 14 which forms an inner surface of the belt has no cover cloth, i.e. it is exposed.

A plurality of grooves 16 (see Figure 5) are formed in said surface of the compression rubber layer 14 in such a manner that they extend perpendicularly to the longitudinal direction of the belt. Each groove has a substantially triangular shape, the "apex" of the triangle being radiussed. A cog 17 is defined between each pair of adjacent grooves 16, i.e. the grooves 16 and the cogs 17 are provided alternately in the compression rubber layer.

The grooves 16 are arranged so that the pitches $P_1$, $P_2$, $P_3$, . . . ., the depths $d_1$, $d_2$, $d_3$ . . . . and the cut angles (i.e. the angles between facing surfaces of the grooves) $a_1$, $a_2$, $a_3$, . . . . . of successive grooves vary randomly in the longitudinal direction of the belt. Thus, adjacent grooves 16 are different in sectional configuration. The pitch of each pair of adjacent grooves is preferably 60% to 100% of the thickness of the belt, the depth of each groove is preferably 20% to 40% of the thickness of the belt, and the cut angle of each groove is in the range of 10 to 40 degrees. In the case of a cog type V-belt for an automobile, the best results are obtained when the groove pitches are 6.0mm to 8.0mm, the groove depths are 2.0mm to 3.0mm, and the cut angles are 10 to 40 degrees.

The configurations of the grooves can be determined by either of the following methods, for example.

*Method I*

In respect of a cog type belt 8.5mm in thickness for an automobile, respective values of the groove pitch $P$, groove depth $d$ and cut angle $a$ are classified in five groups as indicated in the following table.

| Group | 1 | 2 | 3 | 4 | 5 |
|---|---|---|---|---|---|
| p (mm) | 6.0 | 6.5 | 7.0 | 7.5 | 8.0 |
| d (mm) | 2.2 | 2.4 | 2.6 | 2.8 | 3.0 |
| a (degrees) | 20 | 25 | 30 | 35 | 40 |

Hence five sets of parameters are determined. The groups are then successively selected according to a table of random numbers, and successive grooves in the belt are assigned the parameters contained in the respective groups thus selected. The parameters thus determined are applied to a mould from which the belt is subsequently manufactured.

*Method II*

In respect of a cog type belt 10.0mm in thickness for an automobile, respective values of the groove pitch $P$, groove depth $d$ and cut angle $a$ are classified in five groups as indicated in the following table.

| Group | 1 | 2 | 3 | 4 | 5 |
|---|---|---|---|---|---|
| p (mm) | 6.0 | 6.5 | 7.0 | 7.5 | 8.0 |
| d (mm) | 2.0 | 2.25 | 2.5 | 2.75 | 3.0 |
| a (degrees) | 11 | 18 | 25 | 32 | 39 |

Numerical values are selected for each groove parameter according to the group number determined from a table of random numbers, and the groove pitches and configurations are successively determined by combining the numerical values selected for the three parameters.

By determining the groove pitches, depths and cut angles at random, the pressures applied by the cogs to the side walls of the pulley groove become non-uniform. As a result, the squeaky sounds generated when the belt is pulled out of the pulley become random, i.e. they are generated intermittently. This causes the noise level to be decreased.

If only one of the three parameters of groove pitch, cut angle and groove depth is selected at random, the peak sound can to some extent be decreased. However, it has been established that it is difficult to decrease the peak sound sufficiently unless at least two of the three parameters are determined at random. That is, the combination of pitch and angle, the combination of pitch and depth, the combination of angle and depth, or the combination of pitch, angle and depth determined at random can all be employed.

Although the grooves 16 are described above as being perpendicular to the longitudinal direction of the belt, they can instead be inclined obliquely with respect to the longitudinal axis of the belt. The cogs 17 are, in general, made of cushion rubber having a Shore hardness of 80°. However, if the cogs are made of soft rubber having a Shore hardness of 55° to 65°, then the peak sound can be decreased more effectively.

In order to clarify the effects of the present invention, the results of tests conducted on various belts will be described with reference to the following Table. Data 0, 0 and 0 in the first line of row (3) in the column headed "Groove Configuration" are intended to mean a raw edge plane type belt without cogs. A groove angle of 0 indicates that the facing sides of each groove are mutually parallel.

4

## 0010919

### TABLE

| | Groove Configuration | | | When peak sound is generated | |
|---|---|---|---|---|---|
| | Groove pitch | Groove angle | Groove depth | r.p.m. of drive shaft | Sound pressure |
| (1) Groove pitch changed | 7.0 mm | 0 | 2.5 mm | 1,500 rpm | 80 dB |
| | 10.5 | 0 | 2.5 | 2,800 | 89 |
| (2) Groove angle changed | 7.0 | 0 | 2.5 | 1,500 | 80 |
| | 7.0 | 10 | 2.5 | 1,500 | 78 |
| | 7.0 | 20 | 2.5 | 1,500 | 77 |
| | 7.0 | 30 | 2.5 | 1,500 | 76 |
| | 7.0 | 40 | 2.5 | 1,500 | 76 |
| (3) Groove depth changed | 0 | 0 | 0 | 1,500 | 67 |
| | 7.0 | 0 | 1 | 1,500 | 70 |
| | 7.0 | 0 | 2 | 1,500 | 78 |
| | 7.0 | 0 | 3 | 1,500 | 83 |
| (4) Groove pitch selected | Selected at random with 6.0 — 8.0 | 0 | 2.5 | 1,500 | 79 |
| (5) Groove pitch and groove angle, selected at random | Selected at random with 6.0 — 8.0 | Selected at random with 10° — 40° | 2.5 | 1,500 | 73 |
| (6) Groove pitch, groove angle and groove depth, selected at random | Selected at random with 6.0 — 8.0 | Selected at random with 10° — 40° | Selected at random with 2.0 — 3.0 | 1,500 | 71 |

The specification of the belts used for the tests and the test conditions were as follows.

*Belt specification*

In each test (1) to (6), a cog type V-belt was used having an upper (outer) width of 13mm, a thickness of 8.5mm and a circumferential length of 1000mm. In test (1), the groove pitch was changed while maintaining the groove depth and cut angle constant. In test (2), the cut angle was changed while maintaining the groove pitch and groove depth constant. In test (3), the groove depth was changed while maintaining the groove pitch and cut angle constant. In test (4), the pitch of successive grooves was selected at random. In test (5), both the pitch and cut angle of successive grooves were selected at random. In test (6), the pitch, depth and cut angle of successive grooves were all selected at random. In each case, the sound pressure was measured when the peak sound was generated.

*Test conditions*

A test machine was used having a driving pulley 165mm in diameter and a driven pulley 65mm in diameter and was run at 0 to 4000 r.p.m.

From test (1) it is apparent that a change in groove pitch causes a change in the rotational speed at which the peak sound is generated. From test (2) it can be seen that changing the cut angle from 0° to 40° causes a change in peak sound of from 76dB to 80dB. Test (3) shows that a change in groove depth from 0mm to 3.0mm increases the peak sound from 67dB to 83dB. Test (4) indicates that when the pitch of successive grooves is chosen at random in the range of 6.0 to 8.0mm, a peak sound of 79dB is obtained. From test (5), when the pitch between successive grooves is chosen at random in the range 6.0 to 8.0mm and the cut angle of successive grooves is chosen at random in the range 10° to 40°, the peak sound is reduced to 73dB. When these factors are combined with choosing the depths of successive grooves randomly in the range 2.0mm to 3.0mm, test (6) shows that the peak sound is reduced to a value of 71dB.

Test (3) includes the situation in which the belt has no cogs, and is therefore not suitable for comparing the effects of different belts accordingly to the invention. However, it will be noted that, when compared with tests (2), (3) and (4) wherein only one of the parameters of groove pitch, groove depth and cut angle is varied at random, the tests (5) and (6) in which more than one of these parameters are selected randomly give an improved result, decreasing the peak sound to as little as 71dB.

The relationship between rotational speed and sound pressure for various of the belts used in the above-described tests are illustrated graphically in Figure 6. From this figure, it can be seen that the lowest sound generation is achieved by an ordinary raw edge plane type belt having no cogs on its inner surface. As discussed above, however, such a belt does not have the advantage of flexibility.

As indicated by the reference numeral (1) on the graph, the rotational speed at which the peak sound is generated varies in accordance with the groove pitch of the belt: for a groove pitch of 7.0mm a peak sound of 80dB is generated at a rotational speed of 1500 r.p.m., whereas for a groove pitch of 10.5mm a peak sound of 89dB is generated at a rotational speed of 2800 r.p.m. It can be seen that the sound pressure generally increases with increasing rotational speed of the belt, and increases abruptly when the rotational speed reaches a certain value, i.e. there is a peak point (s). Hence, since the rotational speed of the belt at which the peak sound is generated is proportional to the groove pitch, a change in the groove pitch will only shift this peak point and will not substantially decrease the peak sound. It can be seen that the peak sound is produced at a rotational speed of 1500 r.p.m. in each of the tests (3) and (6).

The cog type V-belt should therefore be run at a rotational speed other than that at which the peak point (s) occurs. However, a V-belt used in an automobile, for example, is frequently accelerated or decelerated and it is therefore impossible for the belt never to run at the rotational speed at which the peak sound is generated. The cog type V-belt is disadvantageous in this respect. However, from Figure 6 it can be seen that the absolute value of the peak sound can be decreased by selecting at least two of the three parameters of groove pitch, cut angle and groove depth at random.

As is clear from the above description, an endless power transmission belt according to the invention has transverse grooves whose pitch, cut angle and depth are selected at random. Therefore, the function of the belt is never lowered even when the belt is run at high speed. Furthermore, the reduction of peak sound, regarded as a difficult problem in the art, can be accomplished. The endless power transmission belt according to the invention can be extensively employed as a noise prevention belt in the automobile industry.

**Claims**

1. An endless power transmission belt having a plurality of transverse grooves (16) formed in its inner surface and a cog (17) defined between each pair of adjacent grooves (16), at least two of the three parameters of groove pitch (p) in the longitudinal direction of the belt, groove depth (d) and cut angle (a) between the facing side walls of the groove being varied randomly between successive grooves in the longitudinal direction of the belt, characterised in that the cut angle (a) is in the range of 10° to 40°.

2. A belt as claimed in Claim 1, wherein the groove pitch (p) is varied randomly in a range of 60% to 100% of the thickness of the belt, the groove depth (d) is varied randomly in a range of 20% to 40% of the thickness of the belt, and the cut angle (a) is varied randomly in the range of 10° to 40°.

3. A belt as claimed in Claim 1, wherein the groove pitch (p) is varied randomly in a range of 60% to 100% of the thickness of the belt, the groove depth is varied randomly in a range of 20% to 40% of the thickness of the belt, and the cut angle (a) has a predetermined constant value in the range of 10° to 40°.

4. A belt as claimed in Claim 1, wherein the groove pitch (p) is varied randomly in a range of 60% to 100% of the thickness of the belt, the cut angle (a) is varied randomly in the range of 10° to 40°, and the groove depth (d) has a predetermined constant value in a range of 20% to 40% of the thickness of the belt.

5. A belt as claimed in Claim 1, wherein the groove depth (d) is varied randomly in a range of 20% to 40% of the thickness of the belt, the cut angle (a) is varied randomly in the range of 10° to 40°, and the groove pitch (p) has a predetermined constant value from groove to groove in a range of 60% to 100% of the thickness of the belt.

6. A belt as claimed in any preceding claim, in the form of a raw edge cog V-belt having a neutral axis section (11) including an adhesion rubber layer (12) and a compression rubber layer (14) disposed inwardly of the neutral axis section (11).

7. A belt as claimed in Claim 6, further comprising a cover (13) on a surface of the neutral axis section (11) which forms an outer surface of the belt, a surface (15) of the compression rubber layer (14) which forms an inner surface of the belt being exposed.

8. A belt as claimed in Claim 6 or 7, wherein the grooves (16) are formed in the compression rubber layer (14).

9. A belt as claimed in Claim 6, 7 or 8, wherein the compression rubber layer (14) includes fibres oriented transversely of the belt and made of polyester, polyamide cotton or rayon.

10. A belt as claimed in Claim 1 for use in an automobile wherein the pitch (p) between each pair of adjacent grooves is between 6.0mm and 8.0mm, the depth (d) of each groove is between 2.0mm and 3.0mm and the cut angle (a) of each groove is between 10° to 40°.

## Revendications

1. Courroie sans fin de transmission de puissance possédant des encoches ou rainures trasversales (16) formées dans sa surface interne, chaque paire d'encoches (16) voisines définissant entre elles une dent (17), dans laquelle au moins deux des trois paramètres que sont le pas d'encoche (p) dans la direction longitudinale de la courroie, la profondeur d'encoche (d) et l'angle d'encoche (a) entre les faces latérales opposées de l'encoche sont variés de façon désordonnée d'une encoche à l'autre dans la direction longitudinale de la courroie, caractérisée en ce que l'angle d'encoche (a) est de 10 à 40°.

2. Courroie selon la revendication 1, dans laquelle le pas d'encoche (p) est varié de façon désordonnée dans une plage allant de 60 à 100% de l'épaisseur de la courroie, la profondeur d'encoche (d) est variée de façon désordonnée dans une plage allant de 20 à 40% de l'épaisseur de la courroie et l'angle d'encoche (a) est varié de façon désordonnée dans la plage de 10 à 40°.

3. Courroie selon la revendication 1, dans laquelle le pas d'encoche (p) est varié de façon désordonnée dans une plage de 60 à 100% de l'épaisseur de la courroie, la profondeur d'encoche est variée de façon désordonnée dans une plage de 20 à 40% de l'épaisseur de la courroie et l'angle d'encoche (a) possède une valeur prédéterminée constante (d'une encoche à l'autre) comprise dans la plage de 10 à 40°.

4. Courroie selon la revendication 1, dans laquelle le pas d'encoche (p) est varié de façon désordonnée dans une plage de 60 à 100% de l'épaisseur de la courroie, l'angle d'encoche (a) est varié de façon désordonnée dans la plage de 10 à 40° et la profondeur d'encoche (d) possède une valeur prédéterminée constante (d'une encoche à l'autre) comprise dans une plage de 20 à 40% de l'épaisseur de la courroie.

5. Courroie selon la revendication 1, dans laquelle la profondeur d'encoche (d) est variée de façon désordonnée dans une plage de 20 à 40% de l'épaisseur de la courroie, l'angle d'encoche (a) est varié de façon désordonnée dans la plage de 10 à 40° et le pas d'encoche (p) possède une valeur prédéterminée constante, d'une encoche à l'autre, comprise dans une plage de 60 à 100% de l'épaisseur de la courroie.

6. Courroie selon l'une quelconque des revendications précédentes, sous la forme d'une courroie trapézoïdale crantée à bords bruts possédant une partie (11) à axe neutre comprenant une couche de caoutchouc adhésive (12) et une couche de caoutchouc comprimée (14) disposée à l'intérieur de la partie (11) à axe neutre.

7. Courroie selon la revendication 6, comprenant en outre un recouvrement (13) sur une surface de la partie à axe neutre (11) formant une surface externe de la courroie, une surface (15) de la couche de caoutchouc comprimée (14) formant une surface interne de la courroie étant exposée.

8. Courroie selon la revendication 6 ou 7, dans laquelle les encoches (16) sont formées dans la couche de caoutchouc comprimée (14).

9. Courroie selon la revendication 6, 7 ou 8, dans laquelle la couche de caoutchouc comprimée (14) comprend des fibres orientées transversalement à la courroie et faites de polyester, polyamide, coton ou rayonne.

10. Courroie selon la revendication 1 destinée à être utilisée dans une automobile, dans laquelle le pas (p) entre chaque paire d'encoches adjacentes est compris 6 et 8 mm, la profondeur (d) de chaque encoche est entre 2 et 3 mm et l'angle d'encoche (a) de chaque encoche est entre 10 et 40°.

## Patentansprüche

1. Endloser Treibriemen mit einer Anzahl von an seiner Innenseite geformten Quernuten (16) und jeweils einem zwischen jedem Paar einander benachbarter Nuten (16) ausgebildeten Zahn (17), bei welchem wenigstens zwei der drei Parameter: Teilung (p) der Nuten in Längsrichtung des Riemens,

**0010919**

Tiefe (d) der Nuten und Schnittwinkel (a) zwischen den einander gegenüberstehenden Seitenwände der Nuten zwischen in Längsrichtung des Riemens aufeinander folgenden Nuten unregelmäßig variieren, dadurch gekennzeichnet, daß der Schnittwinkel (a) im Bereich von 10° bis 40° liegt.

2. Riemen nach Anspruch 1, dadurch gekennzeichnet, daß die Teilung (p) der Nuten unregelmäßig in einem Bereich von 60% bis 100% der Dicke des Riemens variiert, daß die Tiefe (d) der Nuten unregelmäßig in einem Bereich von 20% bis 40% der Dicke des Reimens variiert und daß der Schnittwinkel (a) unregelmäßig im Bereich zwischen 10° und 40° variiert.

3. Riemen nach Anspruch 1, dadurch gekennzeichnet, daß die Teilung (p) der Nuten unregelmäßig in einem Bereich von 60% bis 100% der Dicke des Riemens variiert, daß die Tiefe der Nuten unregelmäßig in einem Bereich von 20% bis 40% der Dicke des Riemens variiert und daß der Schnittwinkel (a) von einer Nut zur anderen einen vorbestimmten konstanten Wert im Bereich von 10° bis 40° hat.

4. Riemen nach Anspruch 1, dadurch gekennzeichnet, daß die Teilung (p) der Nuten unregelmäßig in einem Bereich von 60% bis 100% der Dicke des Riemens variiert, daß der Schnittwinkel (a) unregelmäßig im Bereich von 10° bis 40° variiert und daß die Tiefe (d) der Nuten von einer Nut zur anderen einen vorbestimmten konstanten Wert im Bereich von 20% bis 40% der Dicke des Riemens hat.

5. Riemen nach Ansruch 1, dadurch gekennzeichnet, daß die Tiefe (d) der Nuten unregelmäßig in einem Bereich von 20% bis 40% der Dicke des Riemens variiert, daß der Schnittwinkel (a) unregelmäßig im Bereich von 10° bis 40° variiert und daß die Teilung (p) der Nuten von einer Nut zur anderen einen vorbestimmten konstanten Wert in einem Bereich von 60% bis 100% der Dicke des Riemens hat.

6. Riemen nach wenigstens einem der vorstehenden Ansprüche, dadurch gekennzeichnet, daß er die Form eines gezahnten Rauhkanten-Keilriemens aufweist, mit einem eine Adhäsions-Gummischicht (12) aufweisenden Neutralachsenbereich (11) und einer einwärts desselben angeordneten Kompressions-Gummischicht (14).

7. Riemen nach Anspruch 6, ferner gekennzeichnet durch eine eine Außenfläche des Riemens bildenden, Abdeckung (13) auf einer Oberfläche des Neutralachsenbereichs (11) und durch eine eine freiliegende Innenfläche des Riemens bildende Oberfläche (15) der Kompressions-Gummischicht (14).

8. Riemen nach Anspruch 6 oder 7, dadurch gekennzeichnet, daß die Nuten (16) in der Kompressions-Gummischicht (14) geformt sind.

9. Riemen nach Anspruch 6, 7 oder 8, dadurch gekennzeichnet, daß die Kompressions-Gummischicht quer zum Riemen ausgerichtete Fasern aus Polyester, Polyamid, Baumwolle oder Rayon enthält.

10. Riemen nach Anspruch 1 für die Verwendung in einem Kraftfahrzeug, dadurch gekennzeichnet, daß die Teilung (p) zwischen jedem Paar einander benachbarter Nuten zwischen 6,0 mm und 8,0 mm, die Tiefe (d) der einzelnen Nuten zwischen 2,0 mm und 3,0 mm und der Schnittwinkel der einzelnen Nuten zwischen 10° und 40° beträgt.

0010919

FIG. 1

FIG. 2
PRIOR ART

FIG. 4

FIG. 3
PRIOR ART

FIG. 5

FIG. 6

PITCH 10.5mm (1)

(3) (4)

PITCH 7.0mm (1)

(S)

(5)

(6)

RAW EDGE PLANE (no cog)

SOUND PRESSURE LEVEL (dB)

ROTATION RATE ($\times 10^3$ rpm)